# EUROPEAN PATENT SPECIFICATION

(11) **EP 1 188 367 B1**
(45) Date of publication and mention of the grant of the patent: **14.03.2007**
(21) Application number: 01203433.6
(22) Date of filing: 11.09.2001
(51) Int. Cl.: A01J 5/017

(54) **A construction for automatically milking animals**
Konstruktion zum automatischen Melken von Tieren
Dispositif de traite automatique d'animaux

(30) Priority: 15.09.2000 NL 1016195
(43) Date of publication of application: 20.03.2002
(73) Proprietor: Lely Enterprises AG, 6300 ZUG (CH)
(72) Inventor: Fransen, Renatus Ignatius Josephus, 3135 ZD Vlaardingen (NL); van den Berg, Karel, 2971 BR Bleskensgraaf (NL); van der Lely, Alexander, 3065 NA Rotterdam (NL)
(74) Representative: Corten, Maurice Jean F.M.

(56) References cited:
- EP-A- 0 635 203
- EP-A- 0 951 823
- FR-A- 2 298 943

## Description

The invention relates to a construction for automatically milking animals according to the preamble of claim 1.

Such a construction is known. The known constructions are positioned, for example by means of a tractor, at a certain place, where they are put into operation. EP-A-0 189 954 discloses a mobile milking robot without propulsion means. In FR-A-2 298 943 and EP-A-0 635 203 linearly displaceable milking implements are described.

The invention aims at improving such a construction. According to the invention this is achieved by the measures mentioned in the characterizing part of claim 1. The own propulsion means result in a construction with a wide range of application possibilities and a high degree of flexibility in use.

The invention will now be explained in further detail with reference to the accompanying figures.
Figure 1 is a schematic side view of a cow with a first embodiment of the construction according to the invention;
Figure 2 is a schematic rear view of the cow with the construction shown in Figure 1;
Figure 3 is a schematic plan view of a further embodiment of the construction according to the invention;
Figure 4 is a schematic cross-section of the construction according to the arrows II in Figure 3, and
Figure 5 is a schematic plan view of a further embodiment of the construction.

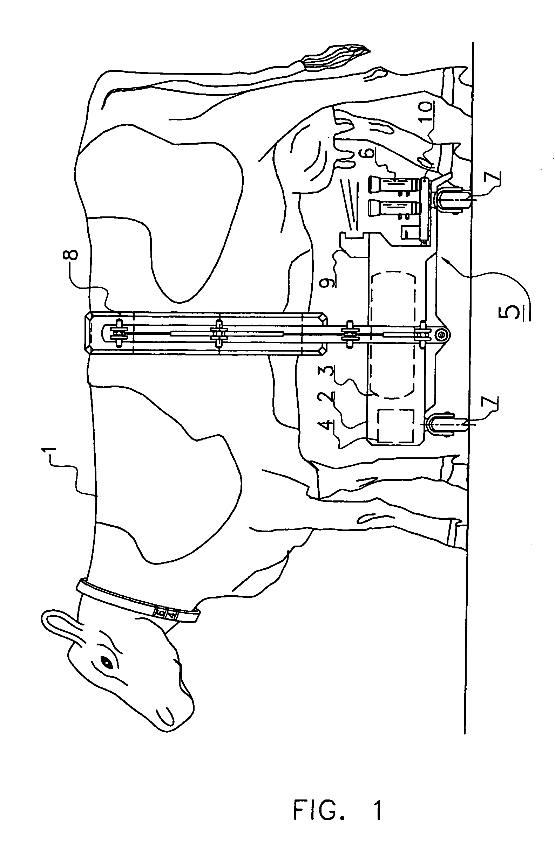

Figure 1 is a schematic side view of a cow 1 with a first embodiment of the construction according to the invention. In this embodiment the construction for automatically milking animals is designed as an unmanned vehicle 2 with a milk reservoir 3, a water tank 4, milk lines and a milking robot 5 (known per se) with (e.g. four) teat cups 6, with means for connecting the teat cups 6 to the teats of the animal 1 to be milked and with control equipment suitable therefor. The construction may further be provided with (non-shown) animal identification means known per se which are suitable for example for co-operating with identification means integrated in a collar of an animal 1 to be milked.

The vehicle 2 is provided with own propulsion means comprising drive means such as a motor and steering means such as swivelling wheels 7. Of course, the construction may also be provided with one swivelling wheel and/or a plurality of non-swivelling wheels, and/or be provided with rollers and/or caterpillar tracks and/or an air cushion construction. With the aid of the drive means and the steering means the construction is suitable for moving across the ground in a rolling and/or a hovering manner.

Preferably the propulsion means comprise navigation means which are suitable for determining a course to be followed for the construction and which are suitable for making the construction follow a certain course with the aid of the propulsion means. The navigation means known per se may comprise a possibly remotely controllable computer with an input member and a map of the neighbourhood as well as GPS or DGPS. In this manner the unmanned vehicle 2 is accurately controllable.

In a preferred embodiment the construction is provided with means for locating a selected animal (said means being possibly suitable for co-operating with positioning means provided near, on or in the animal, such as transmitting and receiving equipment known per se or GPS or DGPS), and is suitable for approaching and possibly tracking the selected animal on the basis of data from the locating means. With the aid of the current position of the vehicle 2 and the current position of a selected animal 1 to be milked, a computer can determine a course to be followed and control the propulsion means in such a manner that the vehicle 2 follows the determined course. In this manner the animal 1 to be milked can automatically be found and approached by the vehicle 2.

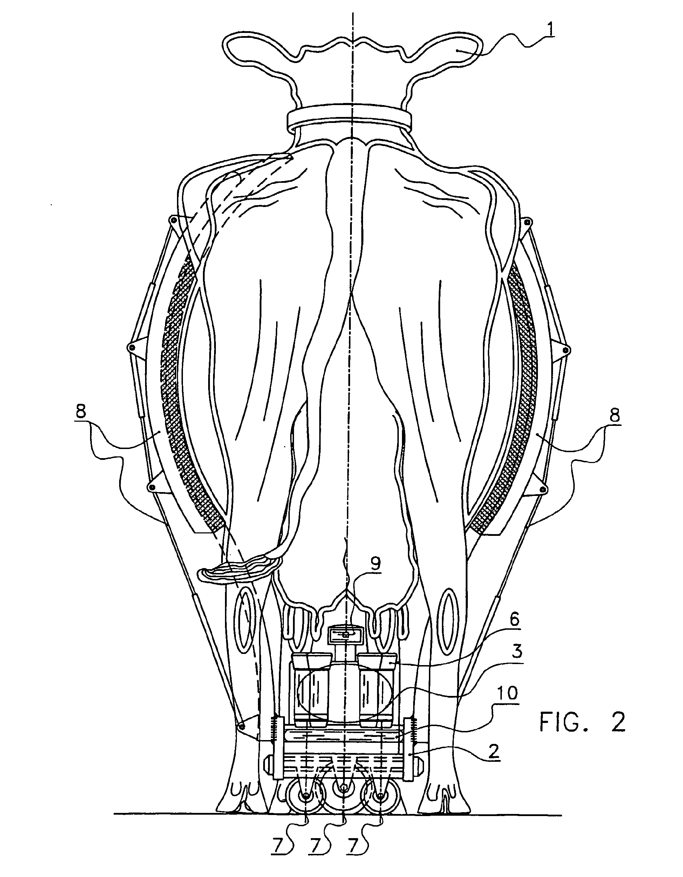

The construction is provided with means for coupling at least a part of the construction, not being constituted by a teat cup 6, to an animal 1 to be milked. Said coupling means may comprise a pair of gripping arms 8, capable of being folded and unfolded or being slid in and out in a telescoping manner, which are able to grip the cow 1 on either side of her trunk when the vehicle 2 has reached a position under the cow 1 (see also Figure 2). In another, non-shown embodiment the gripping arm 8 may be suitable for gripping at least one leg of the animal 1. The construction is suitable for remaining connected with the animal 1 during a time interval after coupling, which time interval may be adjustable. The time interval may also depend on the duration of the milking process and/or the duration of the connection of the teat cups 6. The construction is further suitable for activating the means for connecting the teat cups 6 after coupling. The cow 1 can then be milked automatically. After milking the teat cups 6 are disconnected and the gripping arms 8 are folded or slid aside. Then the construction can continue its way to a following animal to be milked.

The means for connecting the teat cups 6 comprise for example a laser scanner 9 and a lifting device 10 for the teat cups 6 and/or a rotatable and/or shiftable and/or pivotable platform for the teat cups 6. The lifting device 10 may be suitable for connecting the teat cups 6 one by one or in pairs.

The construction is preferably provided with sensor means for registering movements and/or displacements of the animal 1 to be milked. It is for example possible for the construction to track the animal 1 to be milked before or during milking with the aid of data from the sensor means. When the construction as a whole is not too heavy, the means 8 for coupling may also be designed in such a manner that the construction is suspended as a whole from the animal 1 to be milked.

The construction may be provided with lure means for an animal 1 to be milked, with means for summoning an animal 1 to be milked (e.g. with the aid of a transmitter and a receiver), with repelling means for keeping animals that are not to be milked for the time being at a distance and/or with transmitting and/or receiving means for transmitting and/or receiving data to and/or from a receiving station collecting for example data regarding all milkings. The construction may further also be provided with transmitting and/or receiving means for transmitting and/or receiving data to and/or from an animal 1 to be milked. The latter means may be used for example for positioning purposes or for summoning an animal 1 to be milked.

By way of illustration Figure 2 shows schematically a rear view of the cow with the construction of Figure 1.

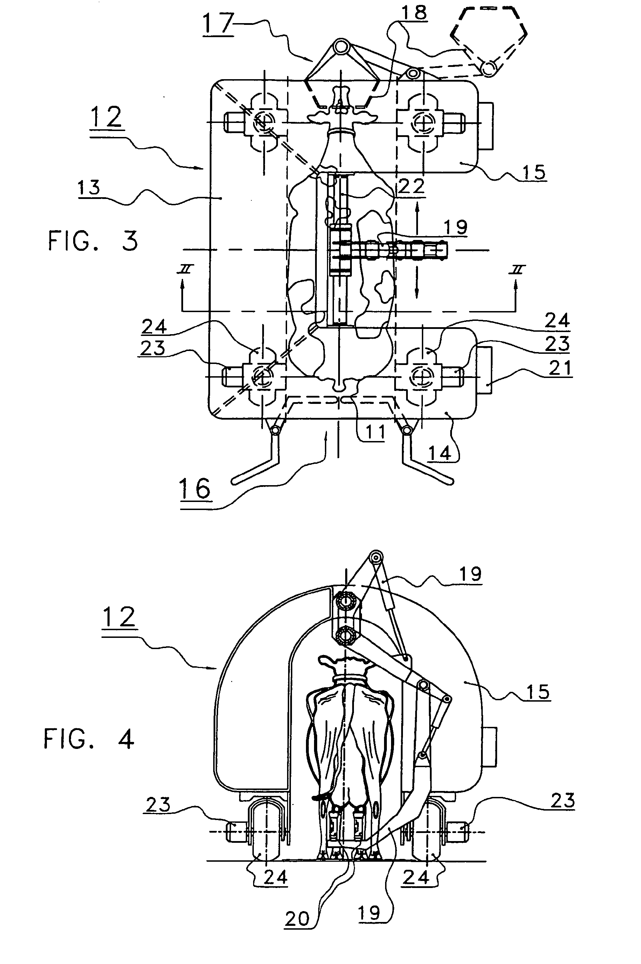

Figure 3 is a schematic plan view of a further embodiment of the construction according to the invention. By way of illustration Figure 4 shows schematically a cross-section of the construction according to the arrows II in Figure 3. In this embodiment the construction for automatically milking an animal 11 is designed as an unmanned vehicle 12 with a milk tank 13, a tank 14 for water and disinfectant, a tank 15 for water and foremilk, an entrance 16, an exit 17 and a feeding trough 18 that is capable of being pivoted aside and serves as a lure means and as a positioning means. The tanks 14 and 15 are designed as arc-shaped ones allowing the cow 11 to pass thereunder.

The construction is further provided with a milking robot (known per se) with a controllable robot arm 19 and (e.g. four) teat cups 20, with means for connecting the teat cups 20 to the teats of the animal 11 to be milked and with control equipment suitable therefor, such as a computer 21. The robot arm 19 may be moved for example along a rail 22 disposed in the upper part of the vehicle 12. The construction may further again be provided with (non-shown) animal identification means known per se which are suitable for example for co-operating with identification means that are integrated in a collar of an animal 11 to be milked.

The vehicle 12 is again provided with own propulsion means comprising drive means such as one or more motors 23 and steering means such as (swivelling) wheels 24. Further there may again be provided navigation means and/or means for locating animals to be milked. The vehicle 12 may automatically be positioned in the vicinity of a number of cows to be milked. The animals can then visit the construction in order to be milked. The vehicle 12 may also approach a selected animal and possibly follow it until said animal is prepared to be milked. For that purpose the vehicle 12 can assume the position shown in Figures 3 and 4.

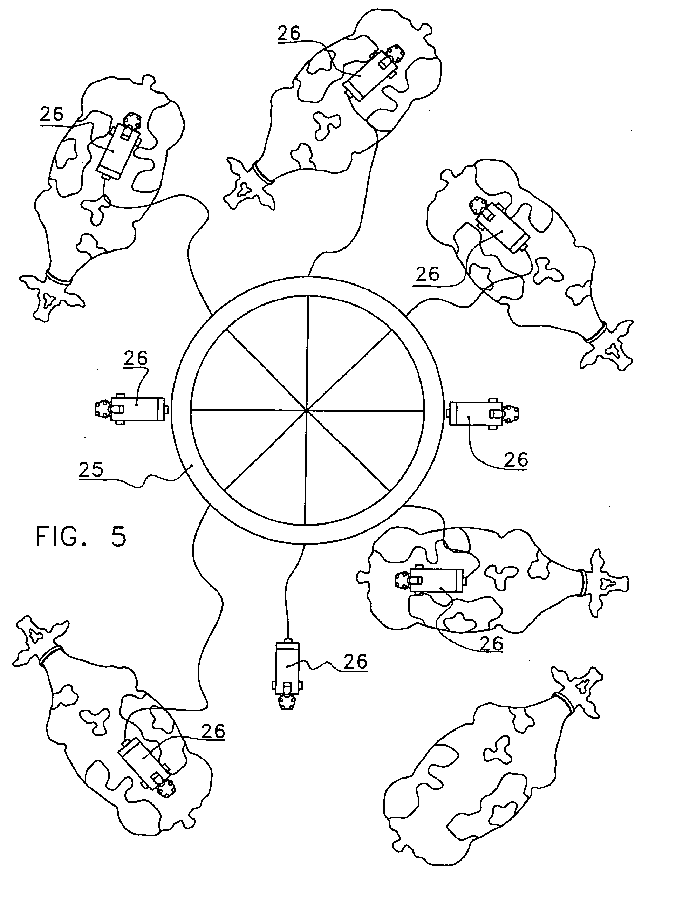

Figure 5 shows schematically a plan view of a further embodiment of the construction. In this embodiment the construction comprises a first movable sub-construction 25 and a plurality of second sub-constructions 26 that are movable relative to the first sub-construction 25. The first sub-construction 25 is an automatically movable master station with appropriate control equipment and a milk reservoir. Further there may again be provided navigation means and/or means for locating animals to be milked. The construction 25 has own propulsion means and can automatically be positioned in the vicinity of a group of animals to be milked.

The second sub-constructions 26 are automatically movable satellite stations and comprise the coupling means as well as the teat cup(s) and the means for connecting the teat cup(s). The constructions 26 may be connected with the construction 25 via milk lines. They have own propulsion means and may each be provided with navigation means and/or means for locating animals to be milked. Therefore, the constructions 26 can locate, approach and possibly track animals to be milked in the vicinity of the master station 25. When they have assumed the appropriate position relative to the animal to be milked, the animal can be milked automatically.

The construction 26 is preferably provided with sensor means for registering movements and/or displacements of the animal to be milked. For example, the construction 26 can track the animal to be milked before or during milking with the aid of data from the sensor means. The construction 26 may be designed both with and without means for gripping the animal to be milked. The constructions 26 may also be designed apart from the construction 25. In that case they deliver regularly or when required the milk yielded at the master station 25.

## Claims

1. A construction for automatically milking animals, said construction (2; 12; 25, 26) being provided with a milk reservoir (3; 13), with milk lines and with a milking robot (5) having at least one teat cup (6; 20) and means (9, 10; 19) for connecting the teat cup(s) (6; 20) to the teats of an animal (1; 11) to be milked, said construction (2; 12; 25, 26) being designed so as to be displaceable as a whole **characterized in that** the construction (2; 12; 25, 26) is provided with own propulsion means (7; 23, 24), the propulsion means (7; 23, 24) comprising drive means (23) and steering means (7; 24).

2. A construction as claimed in claim 1, **characterized in that** the propulsion means (7; 23, 24) comprise navigation means.

3. A construction as claimed in claim 2, **characterized in that** the navigation means are suitable for determining a course to be followed by the construction (2; 12; 25, 26).

4. A construction as claimed in claim 2 or 3, **characterized in that** the navigation means are suitable for making the construction (2; 12; 25, 26) follow a certain course with the aid of the propulsion means (7; 23, 24).

5. A construction as claimed in any one of claims 1 to 4, **characterized in that** the construction (2; 12; 25, 26) is provided with means for locating an animal (1; 11).

6. A construction as claimed in claim 5, **characterized in that** the means for locating are suitable for co-operating with positioning means provided near, on or in the animal (1; 11).

7. A construction as claimed in claim 5 or 6, **characterized in that** the construction (2; 12; 25, 26) is suitable for approaching and possibly tracking the animal (1; 11) on the basis of data from the means for locating an animal.

8. A construction as claimed in any one of claims 1 to 7, **characterized in that** the construction (2; 12; 25, 26) is provided with means (8) for coupling at least a part of the construction (2; 12; 25, 26), not being constituted by a teat cup (6; 20), to an animal (1; 11) to be milked.

9. A construction as claimed in claim 8, **characterized in that** the means for coupling comprise at least one gripping arm (8).

10. A construction as claimed in claim 9, **characterized in that** the gripping arm (8) is suitable for gripping the trunk and/or at least one leg of the animal (1; 11).

11. A construction as claimed in any one of claims 8 to 10, **characterized in that** the construction (2; 12; 25, 26) is suitable for remaining connected with the animal (1; 11) during a time interval after coupling.

12. A construction as claimed in claim 11, **characterized in that** the time interval is adjustable.

13. A construction as claimed in claim 11 or 12, **characterized in that** the time interval depends on the duration of the milking process and/or the duration of the connection of the teat cup(s) (6; 20).

14. A construction as claimed in any one of claims 8 to 13, **characterized in that** the construction (2; 12; 25, 26) is suitable for activating the means (9, 10; 19) for connecting the teat cup(s) (6, 20) after coupling.

15. A construction as claimed in any one of claims 1 to 14, **characterized in that** the construction (2; 12; 25, 26) is provided with wheels (7; 24), rollers, caterpillar tracks and/or an air cushion construction as well as with steering means and is suitable for moving across the ground in a rolling and/or a hovering manner.

16. A construction as claimed in any one of claims 1 to 15, **characterized in that** the construction (2; 12; 25, 26) is provided with a motor (23).

17. A construction as claimed in any one of claims 1 to 16, **characterized in that** the construction (2; 12; 25, 26) is provided with lure means (18) for an animal (1; 11) to be milked.

18. A construction as claimed in any one of claims 1 to 17, **characterized in that** the construction (2; 12; 25, 26) is provided with means for summoning an animal (1; 11) to be milked.

19. A construction as claimed in any one of claims 1 to 18, **characterized in that** the construction (2; 12; 25, 26) is provided with repelling means for keeping animals that are not to be milked for the time being at a distance.

20. A construction as claimed in any one of claims 1 to 19, **characterized in that** the construction (2; 12; 25, 26) is provided with transmitting and/or receiving means for transmitting and/or receiving data to and/or from a receiving station.

21. A construction as claimed in any one of claims 1 to 20, **characterized in that** the construction (2; 12; 25, 26) is provided with transmitting and/or receiving means for transmitting and/or receiving data to and/or from an animal (1; 11) to be milked.

22. A construction as claimed in any one of claims 1 to 21, **characterized in that** the construction (2; 12; 25, 26) comprises a first movable sub-construction (25) and at least one second sub-construction (26) which is movable relative to the first sub-construction (26).

23. A construction as claimed in claim 22, **characterized in that** the first sub-construction (25) comprises a milk reservoir.

24. A construction as claimed in claim 22 or 23, **characterized in that** the second sub-construction (26) comprises the means for coupling as well as the teat cup(s) and the means for connecting the teat cup(s).

25. A construction as claimed in, any one of claims 1 to 24, **characterized in that** the construction (2; 12; 25, 26) is provided with sensor means for registering movements and/or displacements of the animal (1; 11) to be milked.

26. A construction as claimed in claim 25, **characterized in that** the construction (2; 12; 25, 26) is suitable for tracking the animal (1; 11) to be milked with the aid of data from the sensor means.

27. A construction as claimed in claims 22 and 25, **characterized in that** the second sub-construction (26) is suitable for tracking the animal (1; 11) to be milked with the aid of data from the sensor means.

28. A construction as claimed in any one of claims 8 to 27, **characterized in that** the coupling means (8) are suitable for suspending the construction (2; 12) as a whole from the animal (1; 11) to be milked.

## Patentansprüche

1. Konstruktion zum automatischen Melken von Tieren, wobei die Konstruktion (2; 12; 25, 26) mit einem Milchbehälter (3; 13), mit Milchleitungen und mit einem Melkroboter (5) versehen ist, der mindestens einen Zitzenbecher (6; 20) sowie Vorrichtungen (9, 10; 19) zum Anschließen des/der Zitzenbecher(s) (6; 20) an die Zitzen eines zu melkenden Tieres (1; 11) aufweist, wobei die Konstruktion (2; 12; 25, 26) derart ausgebildet ist, daß sie als Ganzes verfahrbar ist,
**dadurch gekennzeichnet, daß** die Konstruktion (2; 12; 25, 26) mit eigenen Fortbewegungsvorrichtungen (7; 23, 24) versehen ist, wobei die Fortbewegungsvorrichtungen (7; 23, 24) Antriebsvorrichtungen (23) und Steuervorrichtungen (7; 24) umfassen.

2. Konstruktion nach Anspruch 1,
**dadurch gekennzeichnet, daß** die Fortbewegungsvorrichtungen (7; 23, 24) Navigationsvorrichtungen umfassen.

3. Konstruktion nach Anspruch 2,
**dadurch gekennzeichnet, daß** die Navigationsvorrichtungen geeignet sind, einen von der Konstruktion (2; 12; 25, 26) zu verfolgenden Kurs zu ermitteln.

4. Konstruktion nach Anspruch 2 oder 3,
**dadurch gekennzeichnet, daß** die Navigationsvorrichtungen bewirken können, daß die Konstruktion (2; 12; 25, 26) mit Hilfe der Fortbewegungsvorrichtungen (7; 23, 24) einen bestimmten Kurs verfolgt.

5. Konstruktion nach einem der Ansprüche 1 bis 4,
**dadurch gekennzeichnet, daß** die Konstruktion (2; 12; 25, 26) mit Vorrichtungen zum Orten eines Tieres (1; 11) versehen ist.

6. Konstruktion nach Anspruch 5,
**dadurch gekennzeichnet, daß** die Vorrichtungen zum Orten geeignet sind, mit Positionierungsvorrichtungen zusammenzuwirken, die nahe, an oder in dem Tier (1; 11) angeordnet sind.

7. Konstruktion nach Anspruch 5 oder 6,
**dadurch gekennzeichnet, daß** die Konstruktion (2; 12; 25, 26) geeignet ist, sich dem Tier (1; 11) auf der Basis von Daten von der Vorrichtung zum Orten eines Tieres zu nähern und ihm eventuell zu folgen.

8. Konstruktion nach einem der Ansprüche 1 bis 7,
**dadurch gekennzeichnet, daß** die Konstruktion (2; 12; 25, 26) mit einer Vorrichtung (8) zum Ankoppeln zumindest eines Teiles der Konstruktion (2; 12; 25, 26), der nicht aus einem Zitzenbecher (6; 20).besteht, an ein zu melkendes Tier (1; 11) versehen ist.

9. Konstruktion nach Anspruch 8,
**dadurch gekennzeichnet, daß** die Vorrichtung zum Ankoppeln mindestens einen Greifarm (8) umfaßt.

10. Konstruktion nach Anspruch 9,
**dadurch gekennzeichnet, daß** der Greifarm (8) geeignet ist, den Rumpf und/oder zumindest ein Bein des Tieres (1; 11) zu ergreifen.

11. Konstruktion nach einem der Ansprüche 8 bis 10,
**dadurch gekennzeichnet, daß** die Konstruktion (2; 12; 25, 26) geeignet ist, mit dem Tier (1; 11) während eines Zeitintervalls nach dem Ankoppeln verbunden zu bleiben.

12. Konstruktion nach Anspruch 11,
**dadurch gekennzeichnet, daß** das Zeitintervall einstellbar ist.

13. Konstruktion nach Anspruch 11 oder 12,
**dadurch gekennzeichnet, daß** das Zeitintervall von der Dauer des Melkvorganges und/oder der Anschlußdauer des/der Zitzenbecher(s) (6; 20) abhängt.

14. Konstruktion nach einem der Ansprüche 8 bis 13,
**dadurch gekennzeichnet, daß** die Konstruktion (2; 12; 25, 26) geeignet ist, die Vorrichtungen (9, 10; 19) zum Anschließen des/der Zitzenbecher(s) (6, 20) nach dem Ankoppeln zu aktivieren.

15. Konstruktion nach einem der Ansprüche 1 bis 14,
**dadurch gekennzeichnet, daß** die Konstruktion (2; 12; 25, 26) mit Rädern (7; 24), Rollen, Gleisketten und/oder einer Luftkissenkonstruktion sowie mit Steuervorrichtungen versehen und geeignet ist, sich rollend und/oder schwebend über den Boden zu bewegen.

16. Konstruktion nach einem der Ansprüche 1 bis 15,
**dadurch gekennzeichnet, daß** die Konstruktion (2; 12; 25, 26) mit einem Motor (23) versehen ist.

17. Konstruktion nach einem der Ansprüche 1 bis 16,
**dadurch gekennzeichnet, daß** die Konstruktion (2; 12; 25, 26) mit einer Lockvorrichtung (18) für ein zu melkendes Tier (1; 11) versehen ist.

18. Konstruktion nach einem der Ansprüche 1 bis 17,
**dadurch gekennzeichnet, daß** die Konstruktion (2; 12; 25, 26) mit einer Vorrichtung zum Einbestellen eines zu melkenden Tieres (1; 11) versehen ist.

19. Konstruktion nach einem der Ansprüche 1 bis 18,
**dadurch gekennzeichnet, daß** die Konstruktion (2; 12; 25, 26) mit einer Zurückweisungsvorrichtung versehen ist, um Tiere, die zum gegenwärtigen Zeitpunkt nicht gemolken werden sollen, auf Abstand zu halten.

20. Konstruktion nach einem der Ansprüche 1 bis 19,
**dadurch gekennzeichnet, daß** die Konstruktion (2; 12; 25, 26) mit Sende- und/oder Empfangsvorrichtungen zum Senden von Daten an und/oder Empfangen von Daten von einer Empfangsstation versehen ist.

21. Konstruktion nach einem der Ansprüche 1 bis 20,
**dadurch gekennzeichnet, daß** die Konstruktion (2; 12; 25, 26) mit Sende- und/oder Empfangsvorrichtungen zum Senden von Daten an und/oder Empfangen von Daten von einem zu melkenden Tier (1; 11) versehen ist.

22. Konstruktion nach einem der Ansprüche 1 bis 21,
**dadurch gekennzeichnet, daß** die Konstruktion (2; 12; 25, 26) eine erste bewegbare Unterkonstruktion (25) und mindestens eine zweite Unterkonstruktion (26) umfaßt, die relativ zu der ersten Unterkonstruktion (26) bewegbar ist.

23. Konstruktion nach Anspruch 22,
**dadurch gekennzeichnet, daß** die erste Unterkonstruktion (25) einen Milchbehälter umfaßt.

24. Konstruktion nach Anspruch 22 oder 23,
**dadurch gekennzeichnet, daß** die zweite Unterkonstruktion (26) die Vorrichtung zum Ankoppeln sowie den/die Zitzenbecher und die Vorrichtung zum Anschließen des/der Zitzenbecher(s) umfaßt.

25. Konstruktion nach einem der Ansprüche 1 bis 24,
**dadurch gekennzeichnet, daß** die Konstruktion (2; 12; 25, 26) mit einer Sensorvorrichtung zum Registrieren von Bewegungen und/oder Verlagerungen des zu melkenden Tieres (1; 11) versehen ist.

26. Konstruktion nach Anspruch 25,
**dadurch gekennzeichnet, daß** die Konstruktion (2 ; 12 ; 25, 26) geeignet ist, dem zu melkenden Tier (1 ; 11) mit Hilfe von Daten von der Sensorvorrichtung zu folgen.

27. Konstruktion nach den Ansprüchen 22 und 25,
**dadurch gekennzeichnet, daß** die zweite Unterkonstruktion (26) geeignet ist, dem zu melkenden Tier (1; 11) mit Hilfe von Daten von der Sensorvorrichtung zu folgen.

28. Konstruktion nach einem der Ansprüche 8 bis 27,
**dadurch gekennzeichnet, daß** die Ankopplungsvorrichtung (8) geeignet ist, die Konstruktion (2; 12) als Ganzes an dem zu melkenden Tier (1; 11) aufzuhängen.

## Revendications

1. Appareil destiné à la traite automatique d'animaux, ledit appareil (2 ; 12 ; 25, 26) comprenant un réservoir de lait (3 ; 13), comprenant des lactoducs et un robot de traite (5) comprenant au moins un gobelet-trayeur (6 ; 20) et des moyens (9, 10 ; 19) destinés à raccorder les gobelets-trayeurs (6 ; 20) aux trayons d'un animal (1 ; 11) qui doit être trait, ledit appareil (2 ; 12 ; 25, 26) étant conçu pour être déplaçable dans son ensemble, **caractérisé en ce que** ledit appareil (2 ; 12 ; 25, 26) comprend des moyens de propulsion (7; 23 ; 24) propres, lesdits moyens de propulsion (7; 23; 24) comprenant des moyens d'entraînement (23) et des moyens de direction (7 ; 24).

2. Appareil selon la revendication 1, **caractérisé en ce que** lesdits moyens de propulsion (7 ; 23 ; 24) comprennent des moyens de navigation.

3. Appareil selon la revendication 2, **caractérisé en ce que** lesdits moyens de navigation sont adaptés pour déterminer un itinéraire que doit suivre l'appareil (2 ; 12 ; 25, 26).

4. Appareil selon la revendication 2 ou la revendication 3, **caractérisé en ce que** les moyens de navigation sont adaptés pour faire suivre un certain itinéraire à l'appareil (2 ; 12 ; 25, 26) à l'aide desdits moyens de propulsion (7 ; 23 ; 24).

5. Appareil selon l'une quelconque des revendications 1 à 4, **caractérisé en ce que** ledit appareil (2 ; 12 ; 25, 26) comprend des moyens destinés à localiser un animal (1 ; 11).

6. Appareil selon la revendication 5, **caractérisé en ce que** les moyens destinés à la localisation sont adaptés pour coopérer avec des moyens de positionnement disposés près de l'animal, sur ou dans ce dernier (1 ; 11).

7. Appareil selon la revendication 5 ou 6, **caractérisé en ce que** l'appareil (2 ; 12 ; 25, 26) est adapté pour approcher et éventuellement suivre l'animal (1 ; 11) sur la base des données en provenance des moyens de localisation d'un animal.

8. Appareil selon l'une quelconque des revendications 1 à 7, **caractérisé en ce que** l'appareil (2 ; 12 ; 25, 26) comprend un moyen (8) d'accouplement d'au moins une partie de l'appareil (2 ; 12 ; 25, 26), qui n'est pas constituée d'un gobelet-trayeur (6 ; 20), à un animal (1 ; 11) qui doit être trait.

9. Appareil selon la revendication 8, **caractérisé en ce que** les moyens destinés à l'accouplement comprennent au moins un bras de préhension (8).

10. Appareil selon la revendication 9, **caractérisé en ce que** le bras de préhension (8) est adapté pour saisir le tronc et/ou au moins une patte de l'animal (1 ; 11).

11. Appareil selon l'une quelconque des revendications 8 à 10, **caractérisé en ce que** l'appareil (2 ; 12 ; 25, 26) est adapté pour rester raccordé à l'animal (1 ; 11) pendant un intervalle de temps après le couplage.

12. Appareil selon la revendication 11, **caractérisé en ce que** l'intervalle de temps est ajustable.

13. Appareil selon la revendication 11 ou la revendication 12, **caractérisé en ce que** l'intervalle de temps dépend de la durée du procédé de traite et/ou de la durée du raccordement des gobelets-trayeurs (6 ; 20).

14. Appareil selon l'une quelconque des revendications 8 à 13, **caractérisé en ce que** l'appareil (2 ; 12 ; 25, 26) est adapté pour activer les moyens (9 ; 10 ; 19) pour le raccordement des gobelets-trayeurs (6 ; 20) après le couplage.

15. Appareil selon l'une quelconque des revendications 1 à 14, **caractérisé en ce que** l'appareil (2 ; 12 ; 25, 26) comprend des roues (7 ; 24), des roulettes, des chenilles et/ou un coussin d'air ainsi qu'un moyen de direction, et il est adapté pour se déplacer sur le sol par roulage et/ou par aéroglissement.

16. Appareil selon l'une quelconque des revendications 1 à 15, **caractérisé en ce que** l'appareil (2 ; 12 ; 25, 26) comprend un moteur (23).

17. Appareil selon l'une quelconque des revendications 1 à 16, **caractérisé en ce que** l'appareil (2 ; 12 ; 25, 26) comprend un moyen de leurre (18) destiné à un animal (1 ; 11) qui doit être trait.

18. Appareil selon l'une quelconque des revendications 1 à 17, **caractérisé en ce que** l'appareil (2 ; 12 ; 25, 26) comprend un moyen d'immobilisation d'un animal (1 ; 11) qui doit être trait.

19. Appareil selon l'une quelconque des revendications 1 à 18, **caractérisé en ce que** ledit appareil (2 ; 12 ; 25, 26) comprend un moyen destiné à repousser et maintenir éloignés les animaux qui ne doivent pas être traits immédiatement.

20. Appareil selon l'une quelconque des revendications 1 à 19, **caractérisé en ce que** l'appareil (2 ; 12 ; 25 ; 26) comprend un moyen d'émission et/ou de réception destiné à émettre et/ou recevoir des données vers et/ou depuis une station de réception.

21. Appareil selon l'une quelconque des revendications 1 à 20, **caractérisé en ce que** l'appareil (2 ; 12 ; 25 ; 26) comprend un moyen d'émission et/ou de réception destiné à émettre et/ou recevoir des données vers et/ou depuis un animal (1 ; 11) qui doit être trait.

22. Appareil selon l'une quelconque des revendications 1 à 21, **caractérisé en ce que** l'appareil (2 ; 12 ; 25 ; 26) comprend un premier sous-ensemble mobile (25) et au moins un second sous-ensemble (26) qui est mobile par rapport au premier sous-ensemble (26).

23. Appareil selon la revendication 22, **caractérisé en ce que** le premier sous-ensemble (25) comprend un réservoir de lait.

24. Appareil selon la revendication 22 ou la revendication 23, **caractérisé en ce que** le second sous-ensemble (26) comprend les moyens de couplage ainsi que les gobelets-trayeurs et les moyens destinés à raccorder les gobelets-trayeurs.

25. Appareil selon l'une quelconque des revendications 1 à 24, **caractérisé en ce que** l'appareil (2 ; 12 ; 25 ; 26) comprend un moyen de capteur destiné à enregistrer les mouvements et/ou les déplacements de l'animal (1 ; 11) qui doit être trait.

26. Appareil selon la revendication 25, **caractérisé en ce que** l'appareil (2 ; 12 ; 25 ; 26) est adapté pour suivre l'animal (1 ; 11) qui doit être trait à l'aide des données du moyen de capteur.

27. Appareil selon la revendication 22 et la revendication 25, **caractérisé en ce que** le second sous-ensemble (26) est adapté pour suivre l'animal (1 ; 11) qui doit être trait à l'aide des données du moyen de capteur.

28. Appareil selon l'une quelconque des revendications 8 à 27, **caractérisé en ce que** les moyens de couplage (8) sont adaptés pour suspendre l'appareil (2 ; 12) dans son ensemble à distance de l'animal (1 ; 11) qui doit être trait.
